# EUROPEAN PATENT APPLICATION

(11) **EP 4 209 552 A1**
(43) Date of publication of application: **12.07.2023**
(21) Application number: 22150515.9
(22) Date of filing: 07.01.2022
(51) Int. Cl.: C08L 67/02

(54) **ARTICLES AND STRUCTURES OF WAVE ABSORPTION MATERIAL**

(71) Applicant: SHPP Global Technologies B.V., 4612 PX Bergen op Zoom (NL)
(72) Inventor: CHENG, Yunan, Shanghai (CN); ZHENG, Yun, Shanghai (CN)
(74) Representative: Dehns

(57) **Abstract**

Thermoplastic compositions include: from about 40 wt% to about 89.9 wt% of at least one crystalline or semi-crystalline polymer; from about 10 wt% to about 40 wt% of at least one amorphous polymer; and from about 0.1 wt% to about 20 wt% of a conductive carbon filler. The thermoplastic composition has an absorption of at least 65%, a reflection of 35% or lower, and a transmission of 5% or lower, wherein absorption, reflection and transmission are tested in transmission mode in accordance with a Free Space Method at a frequency of from 75 gigahertz (GHz) to 110 GHz. The compositions are particularly suitable for use in radar absorbers for a radar or automobile sensor application.

## Description

### FIELD OF THE DISCLOSURE

The present disclosure relates to thermoplastic compositions including a mixture of crystalline and amorphous polymers and conductive carbon filler that have good wave absorption, dielectric and conductivity properties.

### BACKGROUND OF THE DISCLOSURE

Radio detection and ranging (RADAR) is a key element of sensing systems in Auto vehicles and many other radio applications. For Advanced Driving Assistance Systems (ADAS), a radar system is required to deliver more precise signals. Better signals are achieved by reducing noise, thereby increasing the signal-to-noise ratio. Radar system signals are generated by reflection of radio waves off targets, and radar system noise results from radio waves being reflected by "non-targets" such as metal surroundings, including electronic components inside or outside the radar housing. To cancel these noises, a radar absorber is used to absorb the noise waves.

To perform high wave absorption, the radar absorber is usually generated from conductive materials because conductive loss is one of the most efficient technology routes to achieve electromagnetic wave loss. A non-conductive solution usually cannot achieve sufficient wave loss and therefore allows waves to transmit. Various carbon forms such as carbon powders, carbon fibers, and carbon nanotubes are widely used. However, their conductivity generates high surface reflection of the wave, corresponding to high reflection loss. Therefore conductive materials provide good transmission control and good absorption loss, but poor reflection loss properties. Conventional absorption materials offer less than 1% transmission, 65% or less absorption loss, and at or above about 35% reflection loss. Improved absorption materials are desirable.

These and other shortcomings are addressed by aspects of the disclosure.

### SUMMARY

Aspects of the disclosure relate to thermoplastic compositions including: from about 40 wt% to about 89.9 wt% of at least one crystalline or semi-crystalline polymer; from about 10 wt% to about 40 wt% of at least one amorphous polymer; and from about 0.1 wt% to about 20 wt% of a conductive carbon filler. The thermoplastic composition has an absorption of at least 65%, a reflection of 35% or lower, and a transmission of 5% or lower, wherein absorption, reflection and transmission are tested in transmission mode in accordance with a Free Space Method at a frequency of from 75 gigahertz (GHz) to 110 GHz. The combined weight percent value of all components does not exceed 100 wt%, and all weight percent values are based on the total weight of the composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

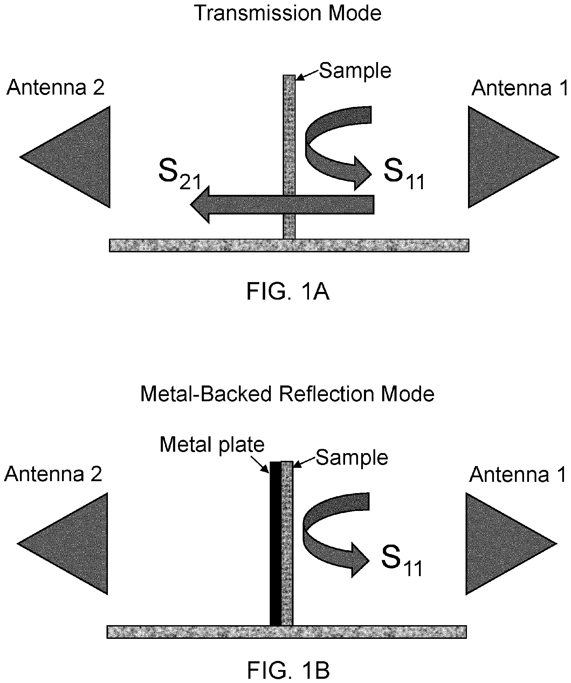

FIGS. 1A and 1B are schematic depictions of the apparatus used to determine the dielectric properties of the materials of this disclosure using the Free Space Method for un-backed and metal-backed samples, respectively.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a crystalline polymer" includes mixtures of two or more crystalline polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 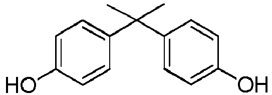 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: from about 40 wt% to about 89.9 wt% of at least one crystalline or semi-crystalline polymer; from about 10 wt% to about 40 wt% of at least one amorphous polymer; and from about 0.1 wt% to about 20 wt% of a conductive carbon filler. The thermoplastic composition has an absorption of at least 65%, a reflection of 35% or lower, and a transmission of 5% or lower, wherein absorption, reflection and transmission are tested in transmission mode in accordance with a Free Space Method at a frequency of from 75 gigahertz (GHz) to 110 GHz. The combined weight percent value of all components does not exceed 100 wt%, and all weight percent values are based on the total weight of the composition.

In some aspects the thermoplastic composition has an absorption of at least 70%, a reflection of 30% or lower, and a transmission of 5% or lower, wherein absorption, reflection and transmission are tested in transmission mode in accordance with a Free Space Method at a frequency of from 75 GHz to 85 GHz.

The at least one crystalline or semi-crystalline polymer includes in some aspects polybutylene terephthalate (PBT), polyamide (PA), polyphthalamide (PPA), copolymers thereof, or a combination thereof. In a particular aspect the at least one crystalline or semi-crystalline polymer includes PBT. In the present application the conventional understanding of "crystalline", "semi-crystalline" and "amorphous" polymers is used. For example, crystalline polymers are identified as having very high crystallinities. Crystalline polymers are rigid and have high melting temperatures. They are less affected by solvent penetration. Semi-crystalline polymers have both crystalline and amorphous regions. Semi-crystalline polymers combine the strength of crystalline polymers with the flexibility of amorphous polymers. Semi-crystalline polymers can be tough with an ability to bend without breaking. Amorphous polymers have polymer chains with branches or irregular groups that cannot pack together regularly enough to form crystals. Amorphous regions of a polymer are made up of a randomly coiled and entangled chains; they softer and have lower melting points than crystalline and semi-crystalline polymers.

In some aspects the at least one amorphous polymer includes polycarbonate (PC), polyetherimide (PEI), poly(p-phenylene oxide), poly(p-phenylene ether) (PPE), copolymers thereof, or a combination thereof. In a particular aspect the at least one amorphous polymer includes PC, PEI, or a combination thereof.

The composition may include a copolyestercarbonate copolymer having ester units of the formula 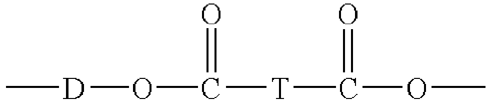 wherein D is a divalent group derived from a dihydroxy compound, and may be, for example, a C₂₋₃₀ alkylene group, a C₃₋₃₀ alicyclic group, a C₆₋₃₀ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a C₂₋₃₀ alkylene group, a C₆₋₃₀ alicyclic group, a C₆₋₃₀ alkyl aromatic group, or a C₆₋₃₀ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a C₂₋₆ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula 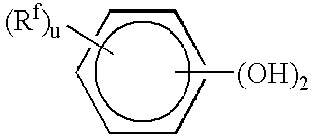 wherein each R^{f} is independently C₁₋₁₂ alkyl, or halogen, and u is 0 to 4. It will be understood that R^{f} is hydrogen when u is 0. Typically, the halogen can be chlorine or bromine. In an aspect, compounds in which the -OH groups are substituted meta to one another, and wherein R^{f} and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units, wherein the molar ratio of isophthalate-resorcinol ester units to terephthalate-resorcinol ester units is 99:1 to 1:99, or 95:5 to 5:95, or 90:10 to 10:90, or 80:20 to 20:80. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In yet further aspects the copolyestercarbonate copolymer has a ratio of ITR ester units to polycarbonate monomer units of from 20:80 to 90:10, or from 25:75 to 15:85, or from 22:78 to 18:82, or 20:80.

In a particular aspect the at least one amorphous polymer includes a copolyestercarbonate copolymer including isophthalate-terephthalate-resorcinol (ITR) ester units and polycarbonate monomer units. The copolyestercarbonate copolymer may have a ratio of ITR ester units to polycarbonate monomer units of from 20:80 to 90:10.

The conductive carbon filler includes in some aspects carbon black, carbon fiber, carbon nanotube, carbon nanostructures, graphite, or a combination thereof.

The composition may further include in certain aspects from at least 0.1 wt% to about 20 wt% of a metal filler. Exemplary metal fillers include, but are not limited to, steel fiber, steel flake, steel particles, or a combination thereof.

In further aspects the composition further includes from at least 0.1 wt% to about 30 wt% of a reinforcing filler. The reinforcing filler may include, but is not limited to, glass fiber, glass flake, or a combination thereof.

Aspects of the disclosure further include compositions including from at least 0.1 wt% to about 10 wt% of at least one rubber impact modifier component. In some aspects the at least one rubber impact modifier component includes a styrene-ethylene/1-butene-styrene (SEBS) block copolymer, an ethylene-methyl acrylate-glycidyl methacrylate (EMA-GMA) terpolymer, or a combination thereof.

Components of compositions according to aspects of the disclosure may be derived from recycled content, such as but not limited to post-consumer recycled (PCR) content. In some aspects one or more of the at least one crystalline or semi-crystalline polymer, the at least one amorphous polymer, or the conductive carbon filler include recycled content.

The compositions described herein have improved wave absorption, dielectric and conductivity properties as compared to conventional compositions. In some aspects the thermoplastic composition has an absorption of at least 65% as tested in transmission mode in accordance with a Free Space Method at a frequency of 77 GHz. The Free Space Method is described below in detail. In further aspects the thermoplastic composition has an absorption of at least 66%, or at least 67%, or at least 68%, or at least 69%, or at least 70%, or at least 71%, or at least 72%, or at least 73%, or from 65-75%, or from 66-75%, or from 67-75%, or from 68-75%, or from 69-75%, or from 70-75%, as tested in transmission mode in accordance with a Free Space Method at a frequency of 77 GHz.

In further aspects the thermoplastic composition has an absorption as tested in transmission mode in accordance with a Free Space Method that is at least 1% higher than that of a comparative composition that does not include the at least one amorphous polymer. In certain aspects the thermoplastic composition has an absorption as tested in transmission mode in accordance with a Free Space Method that is at least 2% higher, or at least 3% higher, or at least 4% higher, or at least 5% higher, or at least 6% higher, or at least 7% higher, or at least 8% higher, or at least 9% higher, or at least 10% higher, or from 1-15% higher, or from 2-15% higher, or from 3-15% higher, or from 4-15% higher, or from 5-15% higher, than that of a comparative composition that does not include the at least one amorphous polymer.

In specific aspects the thermoplastic composition has a reflection of 35% or lower as tested in transmission mode in accordance with a Free Space Method at a frequency of 77 GHz. In yet further aspects the thermoplastic composition has a reflection of 35% or lower, or 34% or lower, or 33% or lower, or 32% or lower, or 31% or lower, or 30% or lower, or 29% or lower, or 28% or lower, or 27% or lower, or 26% or lower, or 25% or lower, or 24% or lower, or 23% or lower, or 22% or lower, or 21% or lower, or 20% or lower, or from 15 to 35%, or from 15 to 30%, or from 20% to 30%, as tested in transmission mode in accordance with a Free Space Method at a frequency of 77 GHz.

In some aspects the thermoplastic composition has a reflection as tested in transmission mode in accordance with a Free Space Method that is at least 1% lower than that of a comparative composition that does not include the at least one amorphous polymer. In other aspects the thermoplastic composition has a reflection as tested in transmission mode in accordance with a Free Space Method that is at least 2% lower, or at least 3% lower, or at least 4% lower, or at least 5% lower, or at least 6% lower, or at least 7% lower, or at least 8% lower, or at least 9% lower, or at least 10% lower, or at least 15% lower, or at least 20% lower, or from 1-40% lower, or from 1-35% lower, or from 5-40% lower, or from 5-35% lower, than that of a comparative composition that does not include the at least one amorphous polymer.

In certain aspects the thermoplastic composition has a transmission of 1% or lower as tested in transmission mode in accordance with a Free Space Method at a frequency of 77 GHz.

In specific aspects the composition has a dielectric constant (Dk) of 13 or lower as tested in accordance with a Free Space Method at a frequency of 77 GHz or as tested in accordance with a Coaxial Method at a frequency of 60 GHz. In further aspects the composition has a dielectric constant (Dk) of 12 or lower, or 11 or lower, or 10 or lower, or 9.5 or lower, or 9 or lower, or 8.5 or lower, or 8 or lower, or 7.5 or lower, or 7 or lower, or from 5-13, or from 5-12, or from 5-11, or from 5-10, as tested in accordance with a Free Space Method at a frequency of 77 GHz or as tested in accordance with a Coaxial Method at a frequency of 60 GHz.

In some aspects the composition has a Dk that is at least 3% lower than that of a comparative composition that does not include the at least one amorphous polymer. In specific aspects the composition has a Dk that is at least 3% lower, or at least 4% lower, or at least 5% lower, or at least 6% lower, or at least 7% lower, or at least 8% lower, or at least 9% lower, or at least 10% lower, than that of a comparative composition that does not include the at least one amorphous polymer.

In other aspects the composition has a dissipation factor (Df) of at least 0.1 as tested in accordance with a Free Space Method at a frequency of 77 GHz or as tested in accordance with a Coaxial Method at a frequency of 60 GHz. In certain aspects the composition has a dissipation factor (Df) of at least 0.15, or at least 0.2, or at least 0.3, or at least 0.4, or at least 0.5, or at least 0.6, or at least 0.7, or at least 0.8, or at least 0.9, or at least 1, as tested in accordance with a Free Space Method at a frequency of 77 GHz or as tested in accordance with a Coaxial Method at a frequency of 60 GHz.

In specific aspects the composition has a conductivity as tested in accordance with a Coaxial Method that is at least 10% lower than a comparative composition that does not include the at least one amorphous polymer. In some aspects the composition has a conductivity as tested in accordance with a Coaxial Method that is at least 15% lower, or at least 20% lower, or at least 20% lower, or at least 20% lower, or at least 20% lower, or from 10-75% lower, or from 10-50% lower, or from 15-75% lower, or from 15-50% lower, than a comparative composition that does not include the at least one amorphous polymer.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a radar absorber for a radar or automobile sensor application.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic composition comprising:
   from about 40 wt% to about 89.9 wt% of at least one crystalline or semi-crystalline polymer;
   from about 10 wt% to about 40 wt% of at least one amorphous polymer; and
   from about 0.1 wt% to about 20 wt% of a conductive carbon filler,
   wherein the thermoplastic composition has an absorption of at least 65%, a reflection of 35% or lower, and a transmission of 5% or lower, and wherein absorption, reflection and transmission are tested in transmission mode in accordance with a Free Space Method at a frequency of from 75 gigahertz (GHz) to 110 GHz, and
   wherein the combined weight percent value of all components does not exceed 100 wt%, and all weight percent values are based on the total weight of the composition.
Aspect 2. The thermoplastic composition according to Aspect 1, wherein the at least one crystalline or semi-crystalline polymer comprises polybutylene terephthalate (PBT), polyamide (PA), polyphthalamide (PPA), copolymers thereof, or a combination thereof.
Aspect 3. The thermoplastic composition according to Aspect 1 or 2, wherein the at least one amorphous polymer comprises polycarbonate (PC), polyetherimide (PEI), poly(p-phenylene oxide), poly(p-phenylene ether) (PPE), copolymers thereof, or a combination thereof.
Aspect 4. The thermoplastic composition according to any of Aspects 1 to 3, wherein the at least one amorphous polymer comprises a copolyestercarbonate copolymer comprising isophthalate-terephthalate-resorcinol (ITR) ester units and polycarbonate monomer units.
Aspect 5. The thermoplastic composition according to Aspect 4, wherein the copolyestercarbonate copolymer has a ratio of ITR ester units to polycarbonate monomer units of from 20:80 to 90:10.
Aspect 6. The thermoplastic composition according to any of Aspects 1 to 5, wherein the conductive carbon filler comprises carbon black, carbon fiber, carbon nanotube, carbon nanostructures, graphite, or a combination thereof.
Aspect 7. The thermoplastic composition according to any of Aspects 1 to 6, wherein the composition further comprises from at least 0.1 wt% to about 20 wt% of a metal filler.
Aspect 8. The thermoplastic composition according to Aspect 7, wherein the metal filler comprises steel fiber, steel flake, steel particles, or a combination thereof.
Aspect 9. The thermoplastic composition according to any of Aspects 1 to 8, wherein the composition further comprises from at least 0.1 wt% to about 30 wt% of a reinforcing filler.
Aspect 10. The thermoplastic composition according to Aspect 9, wherein the reinforcing filler comprises glass fiber, glass flake, or a combination thereof.
Aspect 11. The thermoplastic composition according to any of Aspects 1 to 10, wherein the composition further comprises from at least 0.1 wt% to about 10 wt% of at least one rubber impact modifier component.
Aspect 12. The thermoplastic composition according to Aspect 11, wherein the at least one rubber impact modifier component comprises a styrene-ethylene/1-butene-styrene (SEBS) block copolymer, an ethylene-methyl acrylate-glycidyl methacrylate (EMA-GMA) terpolymer, or a combination thereof.
Aspect 13. The thermoplastic composition according to any of Aspects 1 to 12, wherein one or more of the at least one crystalline or semi-crystalline polymer, the at least one amorphous polymer, or the conductive carbon filler comprise recycled content.
Aspect 14. The thermoplastic composition according to any of Aspects 1 to 13, wherein the thermoplastic composition has an absorption of at least 65% as tested in transmission mode in accordance with a Free Space Method at a frequency of 77 GHz.
Aspect 15. The thermoplastic composition according to any of Aspects 1 to 14, wherein the thermoplastic composition has an absorption as tested in transmission mode in accordance with a Free Space Method that is at least 1% higher than that of a comparative composition that does not comprise the at least one amorphous polymer.
Aspect 16. The thermoplastic composition according to any of Aspects 1 to 15, wherein the thermoplastic composition has a reflection of 35% or lower as tested in transmission mode in accordance with a Free Space Method at a frequency of 77 GHz.
Aspect 17. The thermoplastic composition according to any of Aspects 1 to 16, wherein the thermoplastic composition has a reflection as tested in transmission mode in accordance with a Free Space Method that is at least 1% lower than that of a comparative composition that does not comprise the at least one amorphous polymer.
Aspect 18. The thermoplastic composition according to any of Aspects 1 to 17, wherein the thermoplastic composition has a transmission of 1% or lower as tested in transmission mode in accordance with a Free Space Method at a frequency of 77 GHz.
Aspect 19. The thermoplastic composition according to any of Aspects 1 to 18, wherein the composition has a dielectric constant (Dk) of 13 or lower as tested in accordance with a Free Space Method at a frequency of 77 GHz or as tested in accordance with a Coaxial Method at a frequency of 60 GHz.
Aspect 20. The thermoplastic composition according to any of Aspects 1 to 19, wherein the composition has a Dk that is at least 3% lower than that of a comparative composition that does not comprise the at least one amorphous polymer.
Aspect 21. The thermoplastic composition according to any of Aspects 1 to 20, wherein the composition has a dissipation factor (Df) of at least 0.1 as tested in accordance with a Free Space Method at a frequency of 77 GHz or as tested in accordance with a Coaxial Method at a frequency of 60 GHz.
Aspect 22. The thermoplastic composition according to any of Aspects 1 to 21, wherein the composition has a conductivity as tested in accordance with a Coaxial Method that is at least 10% lower than a comparative composition that does not comprise the at least one amorphous polymer.
Aspect 23. An article comprising the thermoplastic composition according to any of Aspects 1 to 22.
Aspect 24. The article according to Aspect 23, wherein the article is a radar absorber for a radar or automobile sensor application.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Dielectric properties of the compositions described herein may be evaluated according to a Free Space Method. The Free Space Method includes a vector network analyzer, two antennae facing each other with a sample holder placed equidistant between them. The fundamental experimental quantities produced by the Free Space Method are referred to as Scattering parameters, or S-parameters, which are used to describe the input-output relationship between the different ports of an electric network in terms of amplitude and phase versus frequencies. The S-parameters are usually identified by a two-number subscript, with the first number in the subscript referring to the responding port, while the second number refers to the incident port. Thus, S21 means the response at port 2 due to a signal at port 1. The Scattering parameters are complex numbers having a real part and an imaginary part, and they describe the amount of microwave radiation that is either reflected off the sample or transmitted through the sample. The Scattering parameter S11 for Reflection, for example, represents a signal that originates in antenna 1 and that is received back at the same antenna after impinging on the sample and is reflected off. Similarly, the Scattering parameter S21 for Transmission represents a signal that originates in antenna 1 and is received by antenna 2 after being transmitted through the material under test. Scattering parameters for Reflection and Transmission that represent a signal that originates at antenna 2, S22 for Reflection and S12 for Transmission, can also be defined. The S-parameter matrix can be used to determine reflection coefficients and transmission gains from both sides of a two-port network for which four S-parameters, S11, S22, S21, and S12, as defined before, can be identified. A software is then used to convert the Scattering parameter output of the network analyzer to dielectric properties. Free Space measurement techniques provide a method for determining the dielectric permittivity and magnetic permeability of the magneto-dielectric material under test. These methods are contactless, that is the material under test does not make direct contact with any active component of the equipment involved in the measurement.

A schematic depiction of the apparatus used to determine the dielectric properties of the materials of this disclosure using the Free Space Method for un-backed and metal-backed samples is shown in FIGS. 1A and 1B, respectively. The sample size was at least 100 millimeter (mm) x 100 mm x 1.0 mm and injection molded plaques of 100 mm x 100 mm x 3.0 mm dimensions were used for the dielectric measurements. The test was conducted using the Free Space Method at a frequency of from 75 GHz to 110 GHz.

Dielectric measurements using the Free Space Method can be performed in two different modes, the Transmission Mode and the Metal-backed Reflection Mode. The Transmission Mode of measurement measures three types of radiation: Absorption into the sample; Reflection off the sample; and Transmission through the sample. In the Metal-backed Reflection Mode of measurement, a metallic plate (stainless steel, aluminum, etc.) is placed between the material under test and the receiving antenna so transmission through the sample is completely suppressed, and only microwave Absorption into the material and microwave Reflection off the material can be evaluated. As the combination of the two antennae in Transmission mode can only measure the Scattering parameter for Reflection, S11, and the Scattering parameter for Transmission, S21, the amount (in percent) of radiation absorbed by the material under test is calculated as the difference between the total energy impinging on the sample (or 100%) and the sum of the amount (in percent) of radiation transmitted through the sample (measured from S21, and reaching the receiving antenna) and reflected off the sample (measured from S11, and returning back to the emitting antenna). In many applications, it is desirable to maximize percent Absorbed power, and to minimize percent Reflected power and percent Transmitted power when measurements are made using the Transmission mode. There are several dielectric properties that radar designers consider when selecting materials for microwave radar interference applications. Complex permittivity (real and imaginary parts), amount of radiation Absorbed, Reflected or Transmitted by the material, Shielding Effectiveness, Reflection Loss, and Attenuation are only some of the material properties of interest for the manufacture of plastic components for radar sensor applications. Frequency of the incoming radiation and material thickness are also important when trapping microwave energy that if not eliminated or minimized would interfere with the normal operation of the automotive electronic sensors.

The 'Coaxial Method' for determining conductivity, Dk and Df includes measuring these values using a coaxial probe and a network analyzer. The sample size is at least 50 mm; the sample thickness is from 0.1-20 mm thick (2-3 mm preferred); the test was performed in a clean room with constant temperature and humidity using 100 mm x 100 mm x 3.0 mm plaques.

PBT-based compositions were prepared and various properties tested as shown in Tables 1A and 1B:

**Table 1A - PBT Formulations**

| Description | **C1** | **Ex1.1** | **Ex1.2** | **Ex1.3** | **Ex1.4** | **Ex1.5** | **Ex1.6** |
|---|---|---|---|---|---|---|---|
| PBT (Valox^{®} 195, SABIC) | 82 | 71.9 | 61.9 | 51.9 | 41.9 | 56.9 | 51.9 |
| PBT (Valox^{®} 315, SABIC) | 10 | 10 | 10 | 10 | 10 | 10 | 10 |
| PC (100 grade PCP, SABIC) | | 10 | 20 | 30 | 40 | 20 | 20 |
| EMA-GMA | | | | | | 5 | 10 |
| Conductive Carbon Black KETJEN EC-300J | 7.5 | 7.5 | 7.5 | 7.5 | 7.5 | 7.5 | 7.5 |
| Mono Zinc Phosphate | | 0.1 | 0.1 | 0.1 | 0.1 | 0.1 | 0.1 |
| Antioxidant Benzotriazole | 0.2 | 0.2 | 0.2 | 0.2 | 0.2 | 0.2 | 0.2 |
| Mold release pentaerythritol tetrastearate (PETS) | 0.2 | 0.2 | 0.2 | 0.2 | 0.2 | 0.2 | 0.2 |
| Antioxidant 1010 | 0.1 | 0.1 | 0.1 | 0.1 | 0.1 | 0.1 | 0.1 |
| Total (wt%) | 100 | 100 | 100 | 100 | 100 | 100 | 100 |

**Table 1B - Properties of Table 1A Formulations**

| **Property** | **C1** | **Ex1.1** | **Ex1.2** | **Ex1.3** | **Ex1.4** | **Ex1.5** | **Ex1.6** |
|---|---|---|---|---|---|---|---|
| Conductivity (Coaxial Method, Siemens per meter (S/m)) | 11.6 | 10.0 | 8.1 | 6.2 | 3.5 | 4.0 | 3.6 |
| Dk (Coaxial Method, 60 Gigahertz (GHz)) | 8.60 | 8.30 | 7.99 | 7.31 | 6.37 | 6.36 | 6.08 |
| Df (Coaxial Method, 60 GHz) | 0.40 | 0.36 | 0.31 | 0.25 | 0.17 | 0.19 | 0.18 |
| ε' (Dk) (Free Space Method, 77 GHz) | - | - | 8.49 | - | 6.97 | 7.07 | 6.65 |
| ε" (Free Space Method, 77 GHz) | - | - | 3.68 | - | 1.59 | 1.63 | 1.68 |
| Df (ε"/ε') (Free Space Method, 77 GHz) | - | - | 0.43 | - | 0.23 | 0.23 | 0.25 |
| Reflection (Free Space Method, 77 GHz) (%) | 27.8 | - | 25.4 | - | 17.7 | 20.0 | 17.9 |
| Transmission (Free Space Method, 77 GHz) (%) | 0.2 | - | 0.4 | - | 5.0 | 3.5 | 4.9 |
| Absorption (Free Space Method, 77 GHz) (%) | 72 | - | 74.3 | - | 77.3 | 76.5 | 77.2 |
| Specific Gravity (ASTM D792) | 1.3 | 1.3 | 1.3 | 1.3 | 1.3 | 1.3 | 1.3 |
| Flexural Modulus (3.2 mm, 1.27 mm/min) (Megapascals (MPa) ASTM D790 | 2853 | 2877 | 2872 | 2821 | 2741 | 2475 | 2133 |
| Flexural Strength (at yield, 3.2 mm, 1.27 mm/min) (MPa) ASTM D790 | 95 | 98 | 96 | 105 | 105 | 88 | 75 |
| Tensile Modulus (5 mm/min) (MPa) ASTM D638 | 2898 | 2950 | 2931 | 2842 | 2805 | 2535 | 2226 |
| Tensile Strength (at break, 5 mm/min) (MPa) ASTM D638 | 48 | 54 | 53 | 55 | 60 | 50 | 41 |
| Tensile Elongation (at break, 5 mm/min) (%)ASTM D638 | 1.8 | 2.0 | 2.0 | 2.2 | 2.8 | 3.3 | 9.3 |
| Notched IZOD impact strength (-30 °C, 2 lbf/ft) (Joules per meter, J/m) ASTM D256 | 26 | 28 | 25 | 26 | 30 | 33 | 39 |
| Notched IZOD impact strength (23 °C, 2 lbf/ft) (J/m) ASTM D256 | 22 | 23 | 27 | 30 | 31 | 46 | 79 |
| Unnotched IZOD impact strength (23 °C, 5 lbf/ft) (J/m)ASTM D256 | 225 | 276 | 286 | 395 | 1210 | 979 | 1820 |

As shown in Table 1B, conductivity steadily decreases as PC content increased even though conductive carbon black content remained the same at 7.5 wt%. See C1 and Ex1.1-Ex1.4. In addition, the Dk and wave reflection also decreased with a corresponding increase in absorption.

Further, when an impact modifier was included with PC content maintained at 20 wt%, the conductivity also decreased along with Dk and reflection, and absorption increased. See Ex1.2, Ex1.5 and Ex1.6.

Additional PBT-based compositions were prepared and various properties tested as shown in Tables 2A and 2B:

**Table 2A - PBT/GF Formulations**

| **Description** | **C2.1** | **Ex2.1** | **C2.2** | **Ex2.2** | **Ex2.3** | **Ex2.4** | **Ex2.5** | **Ex2.6** | **Ex2.7** |
|---|---|---|---|---|---|---|---|---|---|
| PBT (Valox^{®} 195, SABIC) | 59.5 | 42.4 | 62 | 50 | 50 | 45 | 44.9 | 44.9 | 44.9 |
| PBT (Valox^{®} 315, SABIC) | 10 | 10 | 10 | 10 | 10 | 10 | 10 | 10 | 10 |
| SLX (ITR 90/10 copolyestercarbonate, SABIC) | | | | | | | | | 12 |
| SLX (ITR 80/20 copolyestercarbonate, SABIC) | | | | | | | 12 | | |
| PC (100 grade PCP, SABIC) | | 12 | | | | | | 12 | |
| PEI (polyetherimide) 1010 | | | | 12 | | 12 | | | |
| PEI 1040 | | | | | 12 | | | | |
| EMA-GMA | | 5 | | | | | 5 | 5 | 5 |
| SEBS | | | | | | 5 | | | |
| Glass fiber | 20 | 20 | 20 | 20 | 20 | 20 | 20 | 20 | 20 |
| Conductive Carbon Black KETJEN EC-300J | 10 | 10 | 7.5 | 7.5 | 7.5 | 7.5 | 7.5 | 7.5 | 7.5 |
| Mono Zinc Phosphate | | 0.1 | | | | | 0.1 | 0.1 | 0.1 |
| Antioxidant Benzotriazole | 0.2 | 0.2 | 0.2 | 0.2 | 0.2 | 0.2 | 0.2 | 0.2 | 0.2 |
| Mold release pentaerythritol tetrastearate (PETS) | 0.2 | 0.2 | 0.2 | 0.2 | 0.2 | 0.2 | 0.2 | 0.2 | 0.2 |
| Antioxidant 1010 | 0.1 | 0.1 | 0.1 | 0.1 | 0.1 | 0.1 | 0.1 | 0.1 | 0.1 |
| **Total (wt%)** | 100 | 100 | 100 | 100 | 100 | 100 | 100 | 100 | 100 |

**Table 2B - Properties of Table 2A Formulations**

| **Property** | **C2.1** | **Ex2.1** | **C2.2** | **Ex2.2** | **Ex2.3** | **Ex2.4** | **Ex2.5** | **Ex2.6 Ex2.7** | |
|---|---|---|---|---|---|---|---|---|---|
| Conductivity (Coaxial Method, S/m) | 15.4 | 12.4 | 13.4 | 7.5 | 9.8 | 7.8 | 9.1 | 10.3 | 10.1 |
| Dk (Coaxial Method, 60 GHz) | | 10.0 | 9.0 | 9.0 | 8.97 | 8.76 | 8.66 | 8.72 | 8.61 |
| Df (Coaxial Method, 60 GHz) | | 0.4 | 0.5 | 0.25 | 0.33 | 0.27 | 0.31 | 0.35 | 0.35 |
| ε' (Dk) (Free Space Method, 77 GHz) | 13.3 | 10.9 | 9.3 | 9.43 | 9.86 | 9.72 | 9.26 | 9.68 | 9.19 |
| ε" (Free Space Method, 77 GHz) | 9 | 4.7 | 5.9 | 3.52 | 4.20 | 2.92 | 3.01 | 3.50 | 4.10 |
| Df (ε"/ε') (Free Space Method, 77 GHz) | 0.7 | 0.4 | 0.6 | 0.37 | 0.43 | 0.30 | 0.33 | 0.36 | 0.45 |
| Reflection (Free Space Method, 77 GHz) (%) | 35 | 25.8 | 27.6 | 26.4 | 26.5 | 26.2 | 26.1 | 26.7 | 27.2 |
| Transmission (Free Space Method, 77 GHz) (%) | 0 | 0.1 | 0.0 | 0.6 | 0.3 | 0.9 | 0.7 | 0.3 | 0.2 |
| Absorption (Free Space Method, 77 GHz) (%) | 65 | 74.1 | 72.4 | 73.0 | 73.2 | 72.9 | 73.2 | 73.0 | 72.6 |
| Specific Gravity (ASTM D792) | | | 1.5 | 1.5 | 1.5 | 1.4 | 1.4 | 1.4 | 1.4 |
| Heat deflection temperature (HDT) (°C) 0.45MPa, ASTM D648 | | 215 | 221 | 215 | 217 | 214 | 213 | 214 | 214 |
| HDT (°C) 1.82MPa, ASTM D648 | | 186 | 203 | 188 | 194 | 181 | 180 | 183 | 180 |
| Flexural Modulus (3.2 mm, 1.27 mm/min) (MPa) | | 6860 | 6882 | 7076 | 7185 | 6445 | 6284 | 6266 | 6199 |
| Flexural Strength (at yield, 3.2 mm, 1.27 mm/min) (MPa) | | 150 | 160 | 143 | 144 | 156 | 149 | 154 | 152 |
| Tensile Modulus (5 mm/min) (MPa) | | 7354 | 7566 | 7918 | 7948 | 7175 | 7023 | 6978 | 6832 |
| Tensile Strength (at break, 5 mm/min) (MPa) | | 94 | 108 | 107 | 104 | 107 | 102 | 103 | 100 |
| Tensile Elongation (at break, 5 mm/min) (%) | | 2.2 | 2.2 | 1.9 | 1.8 | 2.4 | 2.4 | 2.5 | 2.5 |
| Notched IZOD impact strength (-30 °C, 2 lbf/ft) (J/m) | | 65 | 70 | 67 | 67 | 65 | 65 | 68 | 68 |
| Notched IZOD impact strength (23 °C, 2 lbf/ft) (J/m) | | 66 | 70 | 68 | 71 | 72 | 72 | 81 | 80 |
| Unnotched IZOD impact strength (23 °C, 5 lbf/ft) (J/m) | | 584 | 342 | 305 | 267 | 497 | 546 | 729 | 658 |

Similar results were observed with compositions including glass fiber. Ex2.1 which included PC and an EMA-GMA had lower conductivity, lower reflection and higher absorption than C2.1 which does not include PC and the impact modifier. Similarly, Ex2.2-Ex2.7 which included an impact modifier (EMA-GMA, SEBS) and/or a secondary resin (PC, SLX, PEI) all had reduced conductivity, lower reflection and higher absorption than C2.2.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
from about 40 wt% to about 89.9 wt% of at least one crystalline or semi-crystalline polymer;
from about 10 wt% to about 40 wt% of at least one amorphous polymer; and
from about 0.1 wt% to about 20 wt% of a conductive carbon filler,
wherein the thermoplastic composition has an absorption of at least 65%, a reflection of 35% or lower, and a transmission of 5% or lower, and wherein absorption, reflection and transmission are tested in transmission mode in accordance with a Free Space Method at a frequency of from 75 gigahertz (GHz) to 110 GHz, and
wherein the combined weight percent value of all components does not exceed 100 wt%, and all weight percent values are based on the total weight of the composition.

2. The thermoplastic composition according to claim 1, wherein the at least one crystalline or semi-crystalline polymer comprises polybutylene terephthalate (PBT), polyamide (PA), polyphthalamide (PPA), copolymers thereof, or a combination thereof.

3. The thermoplastic composition according to claim 1 or 2, wherein the at least one amorphous polymer comprises polycarbonate (PC), polyetherimide (PEI), poly(p-phenylene oxide), poly(p-phenylene ether) (PPE), copolymers thereof, or a combination thereof.

4. The thermoplastic composition according to any of claims 1 to 3, wherein the at least one amorphous polymer comprises a copolyestercarbonate copolymer comprising isophthalate-terephthalate-resorcinol (ITR) ester units and polycarbonate monomer units.

5. The thermoplastic composition according to claim 4, wherein the copolyestercarbonate copolymer has a ratio of ITR ester units to polycarbonate monomer units of from 20:80 to 90:10.

6. The thermoplastic composition according to any of claims 1 to 5, wherein the conductive carbon filler comprises carbon black, carbon fiber, carbon nanotube, carbon nanostructures, graphite, or a combination thereof.

7. The thermoplastic composition according to any of claims 1 to 6, wherein the composition further comprises from at least 0.1 wt% to about 20 wt% of a metal filler comprising steel fiber, steel flake, steel particles, or a combination thereof.

8. The thermoplastic composition according to any of claims 1 to 7, wherein the composition further comprises from at least 0.1 wt% to about 30 wt% of a reinforcing filler comprising glass fiber, glass flake, or a combination thereof.

9. The thermoplastic composition according to any of claims 1 to 8, wherein the composition further comprises from at least 0.1 wt% to about 10 wt% of at least one rubber impact modifier component.

10. The thermoplastic composition according to claim 9, wherein the at least one rubber impact modifier component comprises a styrene-ethylene/1-butene-styrene (SEBS) block copolymer, an ethylene-methyl acrylate-glycidyl methacrylate (EMA-GMA) terpolymer, or a combination thereof.

11. The thermoplastic composition according to any of claims 1 to 10, wherein one or more of the at least one crystalline or semi-crystalline polymer, the at least one amorphous polymer, or the conductive carbon filler comprise recycled content.

12. The thermoplastic composition according to any of claims 1 to 11, wherein the thermoplastic composition has an absorption of at least 65% as tested in transmission mode in accordance with a Free Space Method at a frequency of 77 GHz.

13. The thermoplastic composition according to any of claims 1 to 12, wherein the thermoplastic composition has a reflection of 35% or lower as tested in transmission mode in accordance with a Free Space Method at a frequency of 77 GHz.

14. The thermoplastic composition according to any of claims 1 to 13, wherein the composition has a dielectric constant (Dk) of 13 or lower as tested in accordance with a Free Space Method at a frequency of 77 GHz or as tested in accordance with a Coaxial Method at a frequency of 60 GHz.

15. An article comprising the thermoplastic composition according to any of claims 1 to 14, wherein the article is a radar absorber for a radar or automobile sensor application.
